Europäisches Patentamt

European Patent Office

Office européen des brevets

(19)

(11) Veröffentlichungsnummer : **0 064 247 B1**

(12) **EUROPÄISCHE PATENTSCHRIFT**

(45) Veröffentlichungstag der Patentschrift :
30.01.85

(21) Anmeldenummer : 82103474.1

(22) Anmeldetag : 24.04.82

(51) Int. Cl.⁴ : **B 29 D 11/00**

(54) Vorrichtung zum Herstellen von Formteilen mit asphärischen Oberflächen.

(30) Priorität : 02.05.81 DE 3117474

(43) Veröffentlichungstag der Anmeldung :
10.11.82 Patentblatt 82/45

(45) Bekanntmachung des Hinweises auf die Patenterteilung : 30.01.85 Patentblatt 85/05

(84) Benannte Vertragsstaaten :
AT CH DE FR GB IT LI NL SE

(56) Entgegenhaltungen :
DE-A- 2 949 951

(73) Patentinhaber : **Firma Carl Zeiss**
**D-7920 Heidenheim (Brenz) (DE)**

(72) Erfinder : **Kreuttner, Albert, Dipl.-Ing.**
**Bischof-Fischer-Strasse 110**
**D-7080 Aalen (DE)**

## Beschreibung

Die Erfindung betrifft ein Formwerkzeug mit elastisch verformbarer formteilbegrenzender Fläche zum Herstellen eines Formteiles mit asphärischer Oberfläche aus Kunststoff. Das Formwerkzeug soll insbesondere zur Herstellung von gleitsichtbrillenlinsen Verwendung finden.

Aus der DE-A1-2 949 951 ist ein zweiteiliges Formwerkzeug zur Herstellung von Kontaktlinsen in Gießtechnik bekannt, bei der das untere, den Kunststoff aufnehmende Formteil aus thermoplastischem Material ist und eine sphärische Oberfläche hat. Dieses Formteil ist von einem zylinderförmigen Ring umgeben, in dem mindestens zwei Einstellschrauben sitzen, welche am Formteil anliegen und dessen Formfläche in eine gewünschte asphärische Form verbiegen. Ein derartiges Formwerkzeug ist nur für die Herstellung von Formteilen in Gießtechnik verwendbar, bei der Druck allenfalls dafür aufgewendet wird, um die Formteile zusammenzudrücken, damit sie während des Polymerisationsvorganges und der dabei auftretenden Schrumpfung in gutem Kontakt mit dem Formteil bleiben.

Im Gegensatz dazu muß bei den bekannten Verfahren für die Herstellung von Formteilen aus thermoplastischem Material durch Spritz- oder Presswerkzeuge besonderer Wert darauf gelegt werden, daß die Formteilbegrenzenden Flächen des Werkzeugs genügend steif ausgeführt sind, damit die formteile exakt die gewünschte Form erhalten. Das gilt insbesondere dann, wenn zur Erzeugung von Oberflächen mit optischer Qualität mit hohem Druck während des Herstellvorganges gearbeitet werden muß.

Es ist bekannt, mit Formwerkzeugen für thermoplastisches Material auch formteile mit asphärischen Oberflächen herzustellen. Die formteilbegrenzenden Flächen der dabei verwendeten Werkzeuge werden dazu mit den entsprechenden asphärischen· Oberflächen versehen. Die Herstellung derartiger komplizierter Flächen ist mit einem sehr hohen Kostenaufwand verbunden, insbesondere auch wegen der zuvor erwähnten notwendigen Steifigkeit. Das ist besonders ungünstig bei der Herstellung von Brillenlinsen mit asphärischen Oberflächen, bei denen eine ganze Serie von Linsen unterschiedlicher dioptrischer Eigenschaften und demzufolge auch eine sehr große Anzahl unterschiedlicher asphärischer Flächen benötigt wird.

Der vorliegenden Erfindung liegt daher die Aufgabe zugrunde, eine gattungsgemäße Vorrichtung anzugeben, welche für die Herstellung von asphärischen Formteilen aus thermoplastischem Material durch Formwerkzeuge ohne aufwendige und damit teure Werkzeuge auskommt.

Diese Aufgabe wird gemäß der vorliegenden Erfindung dadurch gelöst, daß die elastisch verformbare Fläche die Oberfläche von mindestens einer Formteilplatte mit sphärischen Oberflächen ist, welche randseitig auf einen Stempel mit topfförmiger Vertiefung aufgesetzt ist und deren Verformung infolge des Druckes eines thermoplastischen Materials während des Herstellvorganges vorausbestimmbar ist.

Zur Vorausbestimmung, wie sich die Formteilplatten unter gegebenen Verhältnissen verformen, bzw. wie die äußeren Verhältnisse gewählt werden müssen, damit eine gewünschte Verformung eintritt, wird zweckmäßigerweise die bekannte Finite Elemente Methode verwendet (siehe z. B. O.C. Zienkiewicz, The finite element methode). Die Zusammenhänge lassen sich auch experimentell ermitteln und in manchen Fällen ist diese Methode sogar günstiger, weil mit weniger Aufwand verbunden. Deswegen wurde der Ausdruck « vorausbestimmbar » gewählt.

In einer vorteilhaften Ausgestaltung der Erfindung werden neben der Dicke und den Radien der sphärischen Formteilplatten und dem Druck des Materials beim Spritz- oder Pressvorgang auch die Rand- und/oder Einspannbedingungen der Formteilplatten mit in die veränderbaren Parameter einbezogen.

Insbesondere für die Herstellung von nicht rotationssymmetrischen asphärischen Flächen ist es vorteilhaft, in einem oder beiden Stempeln, einen oder mehrere elastisch gelagerte Hilfsstempel anzuordnen, die zusätzlich auf die Formteilplatten einwirken. Diese Hilfsstempel werden über eine Hydraulik bewegt, an der sich der Druck oder der Druckverlauf während des Herstellvorganges einstellen läßt. Auf diese Weise ist es z. B. möglich, mit ein- und derselben Formteilplatte unterschiedliche Gleitsichtbrillenlinsen herzustellen, indem der Druck für den Hilfsstempel geändert wird. Zusätzlich kann z. B. eine Formteilplatte torisch ausgebildet werden, so daß Gleitsichtbrillenlinsen mit astigmatischer Wirkung entstehen. Besonders vorteilhaft ist dabei, daß unterschiedliche Achslagen einfach durch Drehen der torischen Formteilplatte mit ein und demselben Werkzeug hergestellt werden können. Außerdem können die Formteilplatten zueinander geneigt werden, wodurch Brillenlinsen mit prismatischer Wirkung entstehen. Auch hierbei können z. B. durch Drehen eines winkligen Zwischenstückes verschiedene Richtungen für die prismatische Wirkung mit ein und demselben Werkzeug erzeugt werden.

Ein wesentlicher Vorteil der Erfindung besteht darin, daß durch relativ einfache Werkzeuge mit sphärischen Flächen aufwendige Formteile mit asphärischen Flächen hergestellt werden. Die sonst notwendige Steifigkeit wird durch eine gezielte Verformbarkeit ersetzt. Durch die zusätzliche Einführung von elastisch gelagerten Hilfsstempeln können unterschiedliche, nicht rotationssymmetrische asphärische Flächen mit ein- und demselben Werkzeug lediglich durch Änderung des Druckes bzw. des Druckverlaufes hergestellt werden. Auf diese Weise ergeben sich wesentliche Kostenreduzierungen im Werkzeugbau und zusätzlich Einsparungen der Umrüstzeiten für das Umwechseln der Formwerkzeuge.

Ein weiterer Vorteil der Erfindung besteht darin, daß zum Teil sogar plane Formteilplatten verwendet werden können. Diese Möglichkeit ist allerdings durch die Zerreißfestigkeit der heute zur Verfügung stehenden Materialien für die Formteilplatten eingeschränkt.

Die Erfindung wird im folgenden anhand der Figuren 1 bis 4 der beigefügten Zeichnungen an Ausführungsbeispielen näher erläutert. Es zeigen :

Figur 1 eine Skizze des Aufbaues des neuen Werkzeugs mit einer deformierbaren Formteilplatte,

Figur 2 eine Skizze des Aufbaues des neuen Werkzeugs mit zwei deformierbaren Formteilplatten,

Figur 3 das neue Werkzeug mit einem zusätzlichen Hilfsstempel und

Figur 4 das neue Werkzeug mit zwei zusätzlichen Hilfsstempeln.

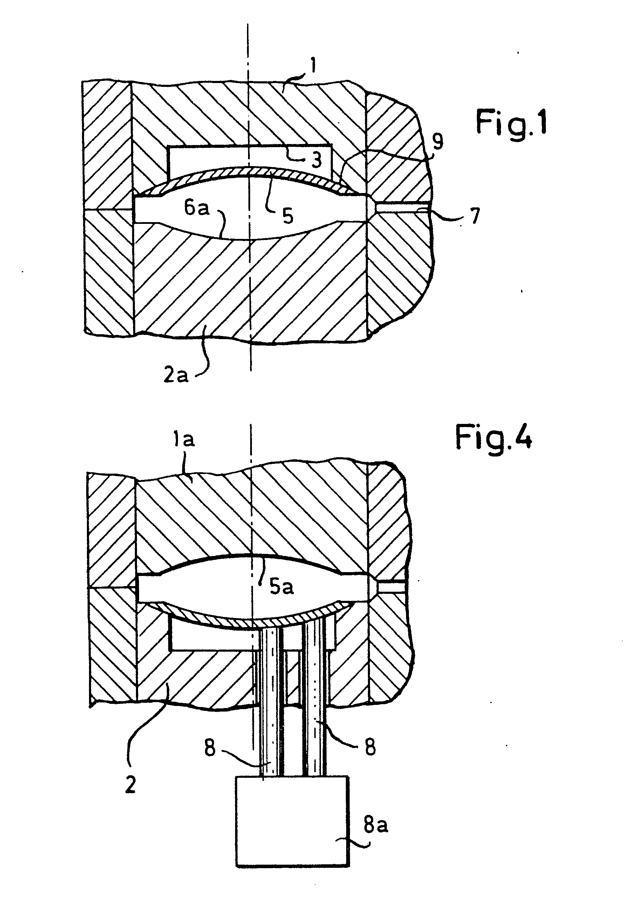

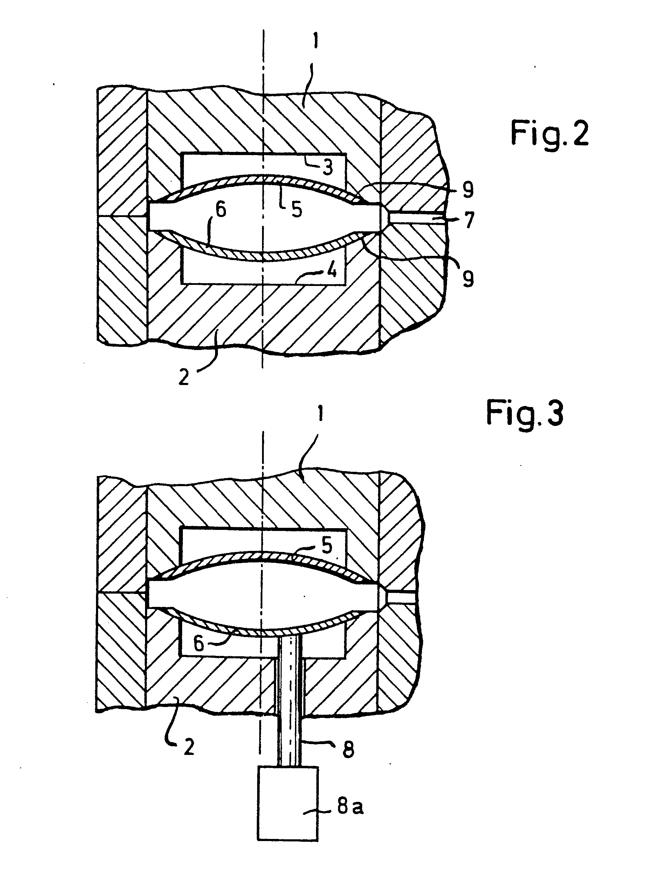

In Figur 1 sind mit 1 und 2a die Stempel des Formwerkzeuges bezeichnet. Während der Stempel 2a die bekannte steife formteilbegrenzende Oberfläche 6a hat, ist der Stempel 1 mit einer topfförmigen Vertiefung 3 ausgebildet. Auf dieser ist die elastisch deformierbare Formteilplatte 5 aufgesetzt. In Fig. 2 sind beide Stempel 1 und 2 mit topfförmigen Vertiefungen 3 und 4 ausgebildet. Auf ihnen sind die elastisch deformierbaren Formteilplatten 5 und 6 aufgesetzt. Die Verbindung zwischen den Formteilplatten 5 und 6 und den Stempeln 1 und 2 kann z. B. in bekannter Weise durch Kleben an den Auflageflächen 9 erfolgen.

In einer vorteilhaften Ausführungsform werden die Rand- und Einspannbedingungen mit in die vorausbestimmbare Verformung der Formteilplatten 5 und 6 einbezogen. Dies kann z. B. dadurch erfolgen, daß die Formteilplatten nur an bestimmten Stellen ihres kreisförmigen Umfanges auf den Stempeln 1 und 2 aufliegen und dort eingespannt oder festgehalten werden. An den übrigen Stellen ihres kreisförmigen Umfanges ist ein schmaler Spalt zwischen ihnen und den Stempeln.

Die Formteilplatten sind aus elastisch verformbaren Material, z. B. aus Werkzeugstahl oder Aluminium mit einer katalytisch aufgebrachten, polierfähigen Nickelschicht und werden mit sphärischen Oberflächen hergestellt. Während des Herstellvorganges werden sie durch den Druck des durch den Einspritzkanal 7 eindringenden Materials zu asphärischen Oberflächen verformt, so daß Formteile mit asphärischen Oberflächen entstehen. Die Form der asphärischen Flächen hängt von der Dicke der Formteilplatten, dem Material der Formteilplatten, den Radien der sphärischen Ausgangsflächen, den Einspannbedingungen und dem Druck, der sich im Inneren der Form während des Herstellvorganges aufbaut, ab. Sie läßt sich nach der Finite Elemente Methode berechnen oder auch experimentell ermitteln. Sie ist damit vorausbestimmbar, so daß angegeben werden kann, wie die Parameter gewählt werden müssen, damit ein Formteil mit bestimmten asphärischen Flächen entsteht. Selbstverständlich können die Parameter so gewählt werden, daß ein Formteil mit zwei verschiedenen asphärischen Flächen entsteht. Nach dem Herstellvorgang und dem Ausformen des Formteiles nehmen die Formteilplatten 5 und 6 wieder ihre alte sphärische Form an.

Fig. 3 zeigt ein Ausführungsbeispiel für die Herstellung nicht rotationssymmetrischer asphärischer Flächen. Durch den elastisch gelagerten Hilfsstempel 8 wird die Formteilplatte 6 zusätzlich verformt, so daß beim Herstellvorgang eine nicht rotationssymmetrische asphärische Fläche des Formteiles entsteht. Ein derartiger Stempel kann an vorausberechneter Stelle plaziert werden. In einer vorteilhaften Ausführungsform ist er mit einer Hydraulik 8a verbunden, mit der ein vorgebbarer Druck oder zeitlicher Druckverlauf während des Herstellvorganges eingestellt werden kann. Zur Herstellung nicht rotationssymmetrischer asphärischer Flächen können auch die Rand- und Einspannbedingungen herangezogen werden, indem diese nicht rotationssymmetrisch ausgebildet werden.

Fig. 4 zeigt ein weiteres Ausführungsbeispiel mit zwei elastisch gelagerten Hilfsstempeln 8, die ebenfalls mit einer Hydraulik verbunden sind. Dabei können für die beiden Hilfsstempel unterschiedliche Drücke bzw. Druckverläufe vorgegeben werden.

Es ist möglich, in einem Stempel weitere Hilfsstempel anzuordnen und so entweder besonders komplizierte nicht rotationssymmetrische asphärische Flächen herzustellen oder solche Flächen, die durch Variation der anderen Parameter nicht realisierbar sind. Ein weiterer Vorteil mehrerer Hilfsstempel ist die größere Variationsmöglichkeit mit ein und demselben Werkzeug und die damit erreichte Vermeidung der Umrüstzeit bei der Herstellung von Formteilen mit ähnlichen Oberflächen.

Vorteilhaft ist es auch, einen Hilfsstempel in der Mitte anzuordnen, wodurch zwar kein nicht rotationssymmetrischer Beitrag erreicht wird, jedoch eine größere Variationsmöglichkeit. In einer besonders vorteilhaften Ausgestaltung der Erfindung werden ein oder mehrere Hilfsstempel mit ebenen Formteilplatten kombiniert.

Die Auflageflächen der Hilfsstempel auf den Formteilplatten können auch von der Kreisform abweichen und z. B. eine längliche Form haben.

**Ansprüche**

1. Formwerkzeug mit elastisch verformbarer formteilbegrenzender Fläche zum Herstellen eines Formteils mit asphärischer Oberfläche aus Kunststoff, dadurch gekennzeichnet, daß die elastisch verformbare Fläche die Oberfläche von mindestens einer Formteilplatte (5, 6) mit sphärischen Oberflächen ist, welche randseitig auf einen Stempel (1, 2) mit topfförmiger Vertiefung (3, 4) aufgesetzt ist und deren Verformung infolge des Druckes eines thermoplastischen Materials während des Herstellvorganges vorausbestimmbar ist.

2. Formwerkzeug nach Anspruch 1, dadurch gekennzeichnet, daß die vorausbestimmbare Verformung der Formteilplatten (5, 6) durch ihre Rand- und/oder Einspannbedingungen bestimmt ist.

3. Formwerkzeug nach Anspruch 1 oder 2, dadurch gekennzeichnet, daß die vorausbestimmbare Verformung der Formteilplatten (5, 6) durch einen oder mehrere innerhalb der Stempel (1, 2) elastisch gelagerte Hilfsstempel (8) bestimmt ist.

4. Formwerkzeug nach Anspruch 3, dadurch gekennzeichnet, daß die Hilfsstempel (8) mit einer Hydraulik (8a) zur Erzeugung vorgebbarer Drücke verbunden sind.

5. Formwerkzeug nach einem der Ansprüche 1 bis 4, dadurch gekennzeichnet, daß die Rand- und/oder Einspannbedingungen der Formteilplatten (5, 6) nicht rotationssymmetrisch sind und/oder die elastisch gelagerten Hilfsstempel (8) nicht rotationssymmetrisch angeordnet sind.

6. Formwerkzeug nach einem der Ansprüche 1 bis 5, dadurch gekennzeichnet, daß eine oder beide Formteilplatten (5, 6) plan sind.

7. Formwerkzeug nach einem der Ansprüche 1 bis 6, dadurch gekennzeichnet, daß eine Formteilplatte (5, 6) torisch ausgebildet ist.

8. Formwerkzeug nach einem der Ansprüche 1 bis 7, dadurch gekennzeichnet, daß ein Stempel (1a, 2a) mit einer steifen torischen Fläche (5a, 6a) versehen ist.

9. Formwerkzeug nach einem der Ansprüche 1 bis 8, dadurch gekennzeichnet, daß die Formteilplatten (5, 6) bzw. die formteilbegrenzenden Flächen (5a, 6a) derart zueinander angeordnet sind, daß die an den Mittelpunkten anliegenden Tangentialebenen einen Winkel zueinander bilden.

10. Formwerkzeug nach einem oder mehreren der Ansprüche 1 bis 9, gekennzeichnet durch seine Verwendung zur Herstellung von Brillenlinsen.

## Claims

1. A molding die with elastically deformable molding-limiting surface for producing molded plastic products having a aspherical surface, characterized by the fact that the elastically deformable surface is the surface of at least one molding plate (5, 6) with spherical surface, which is placed on a plug (1, 2) with a cup-shaped recess (3, 4) and which is deformed precalculable by the pressure of the thermoplastic material during the producing process.

2. A molding die according to claim 1, characterized by the fact that the precalculable deformation of the molding plates (5, 6) is predetermined by their edge and/or clamping conditions.

3. A molding die according to claim 1 or 2, characterized by the fact that the precalculable deformation of the molding plates (5, 6) is determined by one or more auxiliary pistons (8) elastically mounted within the plugs (1, 2).

4. A molding die according to claim 3, characterized by the fact that the auxiliary pistons (8) are connected with a hydraulic system (8a) for the production of predetermined pressures.

5. A molding die according to one of claims 1 to 4, characterized by the fact that the edge and/or clamping conditions of the molding plates (5, 6) are not rotationally symmetric and/or the elastically mounted auxiliary pistons (8) are not arranged with rotational symmetry.

6. A molding die according to one of claims 1 to 5, characterized by the fact that one or both molding plates (5, 6) are flat.

7. A molding die according to one of claims 1 to 6, characterized by the fact that one molding plate (5, 6) is of toric development.

8. A molding die according to one of claims 1 to 7, characterized by the fact that one plug is provided with a rigid torically surface (5a, 6a).

9. A molding die according to one of claims 1 to 8, characterized by the fact that the molding plates (5, 6) respectively the molding-limiting surfaces (5a, 6a) are so arranged with respect to each other that the planes tangential to their center points form an angle with each other.

10. A molding die according to one or more of claims 1 to 9, characterized by the use thereof for the manufacture of eye-glass lenses.

## Revendications

1. Moule possédant une aire, délimitant la pièce moulée, qui est élastiquement déformable, pour produire une pièce moulée à surface non sphérique en matière synthétique, caractérisé en ce que l'aire élastiquement déformable est la surface d'au moins une plaque de moulage (5, 6) à surfaces sphériques, qui est disposée par son bord sur un poinçon (1, 2) possédant un creux en cuvette (3, 4) et dont la déformation sous l'effet de la pression d'une matière thermoplastique pendant le moulage peut être prédéterminée.

2. Moule selon la revendication 1, caractérisé en ce que la déformation prédéterminable des plaques de moulage (5, 6) est déterminée par les conditions au bord et/ou de fixation des plaques.

3. Moule selon la revendication 1 ou 2, caractérisé en ce que la déformation prédéterminable des plaques de moulage (5, 6) est déterminée par un ou plusieurs poinçons auxiliaires (8) montés élastiquement dans les poinçons (1, 2).

4. Moule selon la revendication 3, caractérisé en ce que les poinçons auxiliaires (8) sont raccordés à un système hydraulique (8a) en vue de l'établissement de pressions susceptibles d'être préfixées.

5. Moule selon l'une des revendications 1 à 4, caractérisé en ce que les conditions au bord et/ou de fixation des plaques de moulage (5, 6) ne sont pas à symétrie de révolution et/ou les poinçons auxiliaires (8), montés élastiquement, ne sont pas disposés avec symétrie de révolution.

6. Moule selon l'une des revendications 1 à 5, caractérisé en ce que l'une ou les deux plaques de moulage (5, 6) est ou sont plane(s).

7. Moule selon l'une des revendications 1 à 6, caractérisé en ce qu'une plaque de moulage (5, 6) est en forme de tore.

8. Moule selon l'une des revendications 1 à 7, caractérisé en ce qu'un poinçon (1a, 2a) est pourvu d'une face torique rigide (5a, 6a).

9. Moule selon l'une des revendications 1 à 8, caractérisé en ce que les plaques de moulage (5, 6) ou les aires (5a, 6a) délimitant la pièce moulée sont disposées l'une par rapport à l'autre de manière que les plans tangentiels aux centres forment un angle entre eux.

10. Moule selon l'une ou plusieurs des revendications 1 à 9, caractérisé par son utilisation pour la fabrication de verres de lunettes.

Fig.1

Fig.4

Fig. 2

Fig. 3